# EUROPEAN PATENT APPLICATION

(11) **EP 4 527 640 A1**
(43) Date of publication of application: **26.03.2025**
(21) Application number: 24152763.9
(22) Date of filing: 19.01.2024
(51) Int. Cl.: B60C 23/04, B60B 19/00, B60C 19/00

(54) **WHEEL RIM DEVICE**

(30) Priority: 19.09.2023 TW 112135741
(71) Applicant: Coplus Inc., Tainan City 709031 (TW)
(72) Inventor: Po-Hua, WU, 709031 Tainan City (TW)
(74) Representative: Page White Farrer

(57) **Abstract**

A wheel rim device (200) is adapted for a tire pressure detector (900) to be mounted thereon, and includes a wheel rim body (31), an electric power generating mechanism (4), and a tire pressure indicator (8). The tire pressure indicator (8) includes a wireless communication module (81), a light emitting module (82), and a control module (83). When the wheel rim body (31) rotates, the electric power generating mechanism (4) rotates and generates the electric power, the tire pressure indicator (8) receives the electric power and is energized. The wireless communication module (81) is adapted to wirelessly receive a tire pressure signal from the tire pressure detector (900). The control module (83) is configured to obtain a tire pressure value from the tire pressure signal and control the light emitting module (82) to emit light according to the tire pressure value.

## Description

The disclosure relates to a wheel rim device, and more particularly to a wheel rim device for a vehicle with a wheel.

To improve driving safety, a vehicle is usually installed with a tire pressure monitoring system (TPMS). The tire pressure monitoring system includes a plurality of tire pressure detectors that are respectively installed on wheel rims of the vehicle, and a host computer that is mounted to the vehicle and that is wirelessly and signally connected to the tire pressure detectors. The host computer obtains tire pressure values from tire pressure signals transmitted by the tire pressure detectors, and displays the tire pressure values on a display screen thereof.

The conventional tire pressure monitoring system can only display the tire pressure values through the host computer, and there is no other way to display the tire pressure values.

Therefore, an object of the disclosure is to provide a wheel rim device that can alleviate at least one of the drawbacks of the prior art.

According to an aspect of the disclosure, there is provided a wheel rim device according to claim 1.

Other features and advantages of the disclosure will become apparent in the following detailed description of the embodiment(s) with reference to the accompanying drawings. It is noted that various features may not be drawn to scale.
Fig. 1 is a perspective view illustrating a wheel rim device according to an embodiment of the disclosure.
Fig. 2 is a fragmentary exploded perspective view illustrating the wheel rim device of the embodiment.
Fig. 3 is a block diagram illustrating a coil unit of an electric power generating mechanism and a tire pressure indicator of the wheel rim device of the embodiment.
Fig. 4 is a fragmentary side view illustrating the electric power generating mechanism of the wheel rim device of the embodiment, where a side cover and a decorative cover are omitted.
Fig. 5 is a fragmentary sectional view illustrating the wheel rim device of the embodiment.

Before the disclosure is described in greater detail, it should be noted that where considered appropriate, reference numerals or terminal portions of reference numerals have been repeated among the figures to indicate corresponding or analogous elements, which may optionally have similar characteristics.

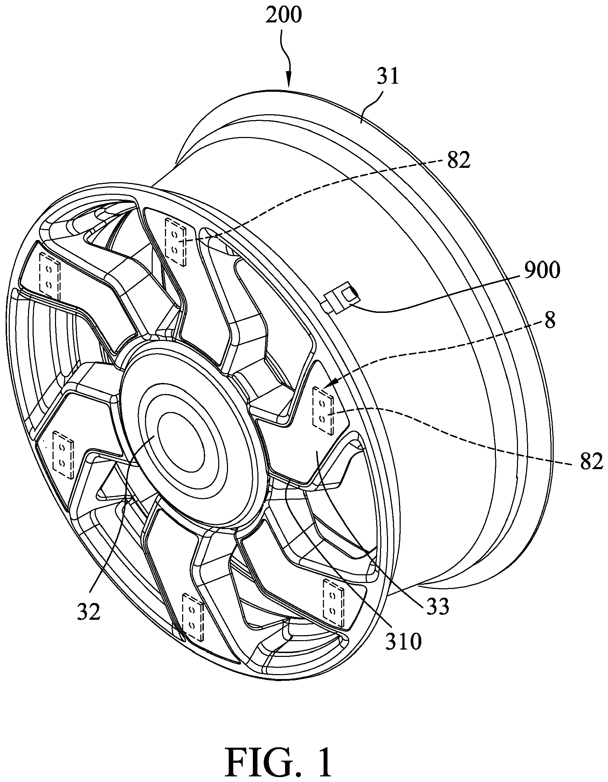

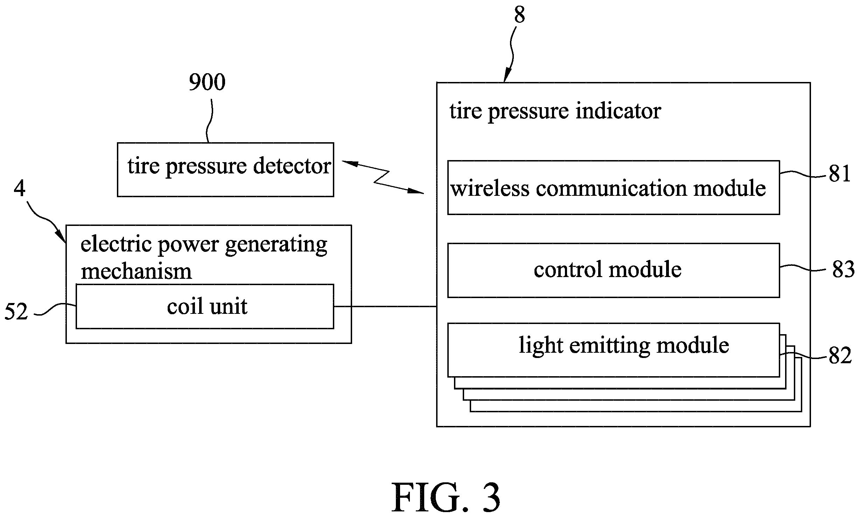

Referring to Figures 1, 2 and 3, according to an embodiment of the disclosure, a wheel rim device 200 is adapted to be mounted on an axle of a vehicle (not shown), is adapted for a tire (not shown) to be mounted thereon to form a wheel, and is further adapted for a tire pressure detector 900 to be mounted thereon. The tire pressure detector 900 detects a tire pressure of the tire, generates a tire pressure signal correspondingly, and wirelessly transmits the tire pressure signal. The vehicle may be an automobile, a motorcycle, etc.

The wheel rim device 200 includes a wheel rim body 31 that is adapted to be fixedly mounted on the axle, an electric power generating mechanism 4 that is coaxially mounted to a central portion of the wheel rim body 31, a tire pressure indicator 8 that is mounted to the wheel rim body 31 and that is electrically coupled to the electric power generating mechanism 4, a decorative cover 32 that is mounted to a side surface of the wheel rim body 31, and a plurality of decorative plates 33 that are light transmissive, that are mounted to the side surface of the wheel rim body 31, and that are angularly spaced apart from one another about a central axis of the wheel rim body 31.

The wheel rim body 31 is adapted for the tire and the tire pressure detector 900 to be mounted thereon, and the side surface of the wheel rim body 31 is recessed with a plurality of installation spaces 310 respectively covered by the decorative plates 33. The decorative cover 32 is located at a central portion of the side surface of the wheel rim body 31 and covers the electric power generating mechanism 4. Since the wheel rim body 31, the decorative cover 32, and the decorative plates 33 have various types and are not points of the disclosure, details thereof are omitted, and the disclosure is not limited to the wheel rim body 31, the decorative cover 32, and the decorative plates 33 illustrated in the figures.

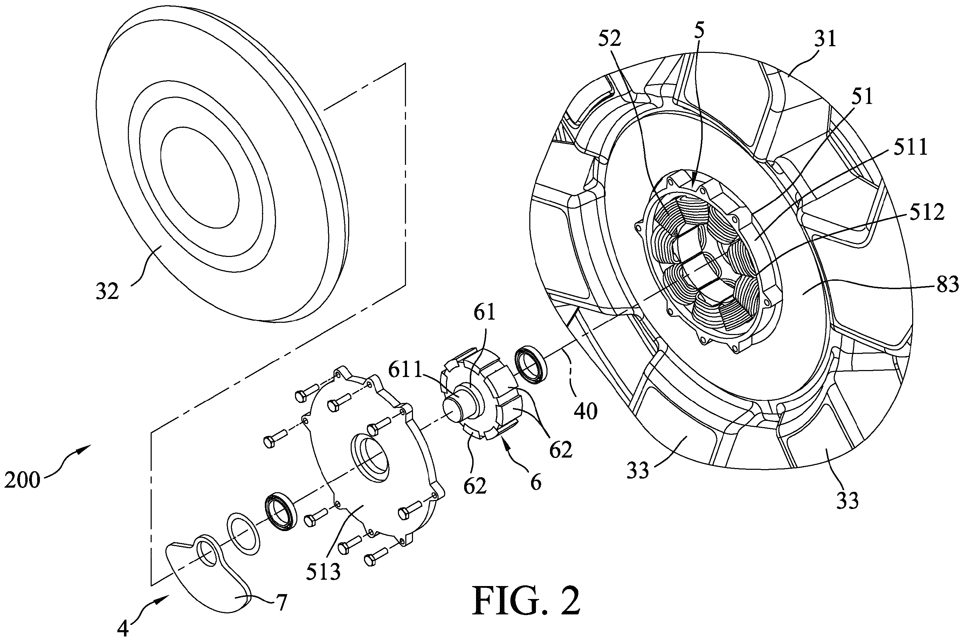

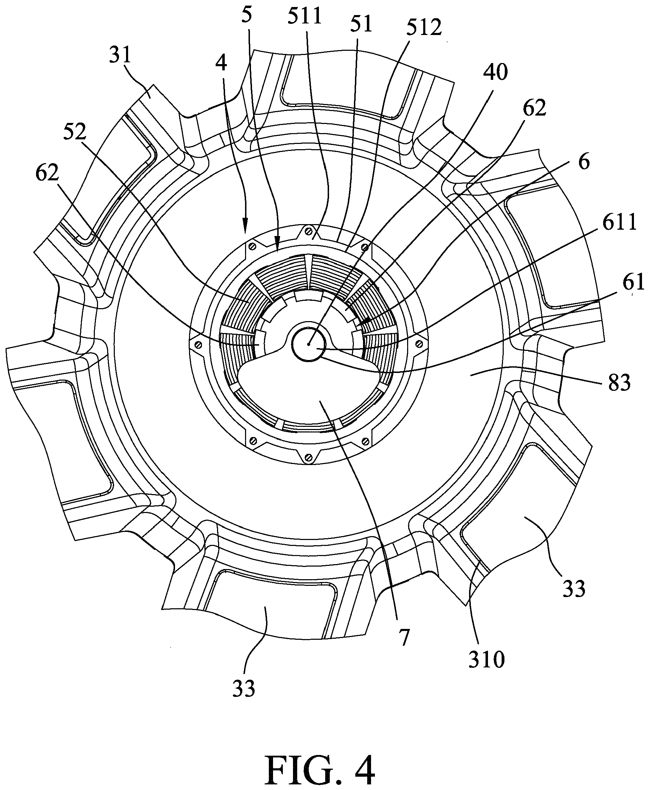

Referring to Figs. 2, 4 and 5, the electric power generating mechanism 4 is configured to be driven by the wheel rim body 31 to rotate to generate electric power. The electric power generating mechanism 4 includes a rotor module 5 that is fixedly connected to the wheel rim body 31 along an axis 40, a stator module 6 that is rotatable relative to the rotor module 5 and that is coaxially mounted in the rotor module 5, and a counterweight member 7 that is fixedly and eccentrically mounted to the stator module 6, that is rotatable relative to the rotor module 5, and that is located outside the rotor module 5.

The rotor module 5 is electrically coupled to the tire pressure indicator 8. The rotor module 5 includes a housing base 51 that is coaxially and fixedly connected to the wheel rim body 31 along the axis 40, and a coil unit 52 that has a ring shape, that is disposed in the housing base 51 about the axis 40, and that is fixedly mounted to the housing base 51. The housing base 51 includes a base body 511 that is coaxially and fixedly mounted to the wheel rim body 31 and that has a side opening 512, and a side cover 513 that is mounted to the base body 511, that covers the side opening 512, and that cooperates with the base body 511 to define an enclosed space 510. The coil unit 52 is disposed in the enclosed space 510.

The stator module 6 includes a rotating shaft 61 that is coaxially mounted to the base body 511 and the side cover 513 and that is rotatable relative to the base body 511 and the side cover 513, and a plurality of magnets 62 that are fixedly disposed on the rotating shaft 61, that are angularly spaced apart from one another about the axis 40, that are located inside an inner peripheral surface of the coil unit 52, and that are spaced apart from the coil unit 52. The rotating shaft 61 has a mounting end portion 611 that axially protrudes out of the side cover 513.

The counterweight member 7 is fixedly and eccentrically mounted to the mounting end portion 611 of the rotating shaft 61, and is located outside the enclosed space 510 of the housing base 51.

When the wheel rim body 31 rotates (for example, when the wheel rim device 200 is mounted on the vehicle and the vehicle moves), the rotor module 5 is driven to rotate relative to the stator module 6, which does not rotate along with the rotor module 5 due to a force of gravity of the counterweight member 7, so that the coil unit 52 of the rotor module 5 rotates relative to the magnets 62 of the stator module 6 and generates the electric power through electromagnetic induction.

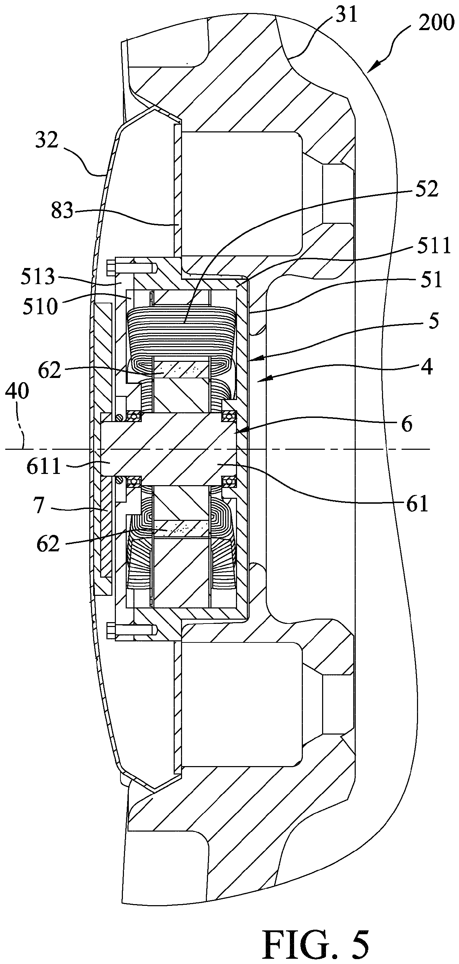

Referring to Figs. 1 and 5, the tire pressure indicator 8 is electrically coupled to the electric power generating mechanism 4 to receive the electric power generated by the electric power generating mechanism 4. The tire pressure indicator 8 includes a wireless communication module 81 that is adapted to wirelessly communicate with the tire pressure detector 900, a plurality of light emitting modules 82, and a control module 83 that is signally connected to the wireless communication module 81 and the light emitting modules 82. In this embodiment, the wireless communication module 81 is integrated with the control module 83 to be embodied as a single circuit, and is disposed on an area of the wheel rim body 31 covered by the decorative cover 32.

The light emitting modules 82 are disposed respectively in the installation spaces 310, and are covered respectively by the decorative plates 33. Each of the light emitting modules 82 has a plurality of light-emission modes.

When the wheel rim body 31 rotates, the electric power generating mechanism 4 rotates and generates the electric power, such that the tire pressure indicator 8 receives the electric power and is energized. The wireless communication module 81 is adapted to wirelessly receive the tire pressure signal that is transmitted by the tire pressure detector 900 (as shown in Fig. 1) after the tire pressure indicator 8 is energized. The control module 83 is configured to, after the tire pressure signal is received, analyze the tire pressure signal to obtain a tire pressure value from the tire pressure signal and control each of the light emitting modules 82 to emit light in one of the light-emission modes according to the tire pressure value to indicate the tire pressure value.

In this embodiment, the light emitting modules 82 are eccentrically mounted to the wheel rim body 31 such that, when the wheel rim body 31 rotates, each of the light emitting modules 82 rotates about the central axis of the wheel rim body 31, and the light emitted by each of the light emitting modules 82 penetrates a respective one of the decorative plates 33 and forms a circle of light which may produce a visual effect.

In this embodiment, the control module 83 is configured to control each of the light emitting modules 82 to emit the light in different colors according to the tire pressure value. That is to say, each of the light-emission modes of the light emitting modules 82 corresponds to the color of the light. In some embodiments, the control module 83 may be configured to control each of the light emitting modules 82 to emit the light in different levels of brightness or intermittently emit the light at different frequencies according to the tire pressure value so as to indicate the tire pressure value. The light-emission modes of each of the light emitting modules 82 are not limited to the disclosure as long as the light emitting modules 82 are capable of indicating the tire pressure value and producing a visual effect.

Furthermore, in this embodiment, the light emitting modules 82 are disposed in the installation spaces 310 that are recessed in the side surface of the wheel rim body 31 and are covered by the decorative plates 33 that are light transmissive. However, in some embodiments, the light emitting modules 82 may be directly exposed on the side surface of the wheel rim body 31.

Furthermore, in this embodiment, the tire pressure indicator 8 includes the plurality of the light emitting modules 82. However, in some embodiments, the tire pressure indicator 8 may include only one light emitting module 82.

In summary, by virtue of the electric power generating mechanism 4 and the tire power generating indicator 8, when the wheel rim device 200 is mounted on the vehicle and the vehicle moves, the wheel rim device 200 emits the light which is capable of indicating the tire pressure value and which may change according to the tire pressure value at the moment. Furthermore, when the vehicle moves, the light emitted by the wheel rim device 200 may form the circle of light which may produce a visual effect. Therefore, the object of the disclosure is achieved.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A wheel rim device (200) adapted to be mounted on an axle of a vehicle and adapted for a tire pressure detector (900) to be mounted thereon, said wheel rim device (200) being **characterized by**:
a wheel rim body (31) adapted to be mounted on the axle and adapted for the tire pressure detector (900) to be mounted thereon;
an electric power generating mechanism (4) mounted to said wheel rim body (31) and configured to be driven by said wheel rim body (31) to rotate to generate electric power; and
a tire pressure indicator (8) mounted to said wheel rim body (31) and electrically coupled to said electric power generating mechanism (4) to receive the electric power generated by said electric power generating mechanism (4), said tire pressure indicator (8) including a wireless communication module (81), a light emitting module (82) with a plurality of light-emission modes, and a control module (83) that is signally connected to said wireless communication module (81) and said light emitting module (82), when said wheel rim body (31) rotates, said electric power generating mechanism (4) rotating and generating the electric power, such that said tire pressure indicator (8) receives the electric power and is energized, said wireless communication module (81) being adapted to wirelessly receive a tire pressure signal that is transmitted by the tire pressure detector (900) after said tire pressure indicator (8) is energized, said control module (83) being configured to, after the tire pressure signal is received, obtain a tire pressure value from the tire pressure signal and control said light emitting module (82) to emit light in one of the light-emission modes according to the tire pressure value.

2. The wheel rim device (200) as claimed in claim 1, wherein said electric power generating mechanism (4) includes a rotor module (5) fixedly connected to said wheel rim body (31) and electrically coupled to said tire pressure indicator (8), a stator module (6) rotatable relative to said rotor module (5) and coaxially mounted in said rotor module (5), and a counterweight member (7) rotatable relative to said rotor module (5) and fixedly and eccentrically mounted to said stator module (6), when said wheel rim body (31) rotates, said rotor module (5) being driven to rotate relative to said stator module (6) which does not rotate along with said rotor module (5) due to a force of gravity of said counterweight member (7), and generating the electric power through electromagnetic induction.

3. The wheel rim device (200) as claimed in claim 2, wherein said rotor module (5) includes a housing base (51) coaxially and fixedly connected to said wheel rim body (31) along an axis (40), and a coil unit (52) disposed in said housing base (51) about said axis (40), said stator module (6) including a rotating shaft (61) that is coaxially mounted to said housing base (51) and that is rotatable relative to said housing base (51), and a plurality of magnets (62) that are disposed on said rotating shaft (61) and that are angularly spaced apart from one another about said axis (40), when said wheel rim body (31) rotates, said coil unit (52) of said rotor module (5) rotating relative to said magnets (62) of said stator module (6), thereby generating the electric power, said counterweight member (7) being fixedly and eccentrically mounted to said rotating shaft (61).

4. The wheel rim device (200) as claimed in claim 3, wherein said housing base (51) includes a base body (511) coaxially and fixedly mounted to said wheel rim body (31) and having a side opening (512), and a side cover (513) covering said side opening (512) and cooperating with said base body (511) to define an enclosed space (510), said coil unit (52) being disposed in said enclosed space (510), said rotating shaft (61) being rotatably mounted to said base body (511) and said side cover (513).

5. The wheel rim device (200) as claimed in claim 4, wherein said rotating shaft (61) has a mounting end portion (611) protruding out of said side cover (513), said counterweight member (7) being fixedly and eccentrically mounted to said mounting end portion (611) and being located outside said enclosed space (510).

6. The wheel rim device (200) as claimed in any one of claims 1 to 5, wherein said control module (83) is configured to control said light emitting module (82) to emit the light in different levels of brightness according to the tire pressure value.

7. The wheel rim device (200) as claimed in any one of claims 1 to 6, wherein said control module (83) is configured to control said light emitting module (82) to emit the light in different colors according to the tire pressure value.

8. The wheel rim device (200) as claimed in any one of claims 1 to 7, wherein said control module (83) is configured to control said light emitting module (82) to intermittently emit the light at different frequencies according to the tire pressure value.

9. The wheel rim device (200) as claimed in any one of claims 1 to 8, further comprising a decorative cover (32) that is mounted to said wheel rim body (31) and that covers said electric power generating mechanism (4).

10. The wheel rim device (200) as claimed in any one of claims 1 to 9, wherein said wheel rim body (31) has a side surface recessed with an installation space (310), said wheel rim device (200) further comprising a decorative plate (33) that is light transmissive, that is mounted to said wheel rim body (31) and that covers said installation space (310), said light emitting module (82) being disposed in said installation space (310).
